# FASCICULE DE BREVET EUROPEEN

(11) **EP 2 771 896 B1**
(45) Date de publication et mention de la délivrance du brevet: **06.01.2016**
(21) Numéro de dépôt: 12775268.1
(22) Date de dépôt: 23.10.2012
(51) Int. Cl.: H01H 31/00, H01H 31/24, H02B 13/035

(54) **DISPOSITIF D'AIGUILLAGE ELECTRIQUE A UN POINT DE JONCTION ENTRE DEUX PARTIES D'UN RESEAU**
ELEKTRISCHE SCHALTVORRICHTUNG AN EINEM ÜBERGANGSPUNKT ZWISCHEN ZWEI TEILEN EINES NETZWERKS
ELECTRICAL SWITCHING DEVICE AT A JUNCTION POINT BETWEEN TWO PARTS OF A NETWORK

(30) Priorité: 25.10.2011 FR 1159662
(43) Date de publication de la demande: 03.09.2014
(73) Titulaire: ALSTOM Technology Ltd, 5400 Baden (CH)
(72) Inventeur: GELLOZ, Bernard, F-73100 St Offenge-Dessous (FR); GARAND, Bruno, F-73100 Pugny-Chatenod (FR); LORAY, Frédéric, F-38130 Echirolles (FR); FICHEUX, Arnaud, F-73000 Chambery (FR)
(74) Mandataire: Ahner, Philippe
(86) Numéro de dépôt international: PCT/EP2012/070961
(87) Numéro de publication internationale: WO 2013/060675

(56) Documents cités:
- EP-A2- 0 824 264
- WO-A1-2005/062325
- US-A1- 2003 141 281

## Description

Le sujet de l'invention présente est un dispositif d'aiguillage disposé à un point de jonction entre deux parties de division du réseau, et offrant une possibilité de coupure de l'une ou l'autre de ces parties.

Les postes électriques à haute tension permettent de distribuer l'énergie sur les réseaux et aussi de protéger ces réseaux. En cas de défaut ou d'entretien, il est avantageux de déconnecter une seule partie du réseau tout en laissant le reste en fonctionnement normal. Les sectionneurs sont prévus pour assurer cette fonction de déconnexion, mais ils doivent parfois être complétés par des dispositifs procurant une distance d'isolation supplémentaire, notamment dans les installations fonctionnant dans un gaz isolant sous pression tel l'hexafluorure de soufre SF6, pendant un entretien impliquant un démontage partiel du réseau, une plus grande précaution étant alors nécessaire. Certains de ces dispositifs consistent en des compartiments intermédiaires, dont la fonction est de maintenir les portions actives du réseau plus éloignées des portions qui subissent l'entretien, mais qui possèdent l'inconvénient d'imposer en général l'emploi de cônes diélectriques supplémentaires coûteux à leurs extrémités.

Un autre genre de dispositifs, auquel on s'intéresse ici, permet de déconnecter temporairement le conducteur sur une longueur supplémentaire non loin du sectionneur ; il est appelé éclisse et lui aussi bien connu. Un tel dispositif à éclisses, installé au point de jonction entre deux parties d'un réseau électrique telles que deux jeux de barres et une partie commune d'alimentation, est le sujet du brevet US-A-3 485 971. Une éclisse est installée sur un aiguillage électrique entre le conducteur commun et le sectionneur de chacun des jeux de barres. Chacune comprend deux contacts mobiles coulissants, aptes à s'éloigner l'un de l'autre pour joindre respectivement le conducteur commun et le conducteur du jeu de barres et établir la connexion, ou se rétracter ensemble par un mouvement inverse. Deux éclisses sont nécessaires pour cet aiguillage, ce qui est dispendieux.

Dans le brevet US-A-3 553 397, une éclisse est commune aux deux parties du réseau et installée directement à l'extrémité de la partie commune. Elle est toutefois conforme aux éclisses précédentes, c'est-à-dire qu'elle comprend deux contacts alignés, mobiles chacun vers un conducteur d'une des parties de division du réseau pour le connecter ou non à la partie commune. Même si l'éclisse est ici unique, le dispositif doit avoir une longueur importante qui interdit de l'employer sur certains réseaux existants en remplacement d'aiguillages simples, où les conducteurs sont connectés en permanence entre la partie commune et les parties de division du réseau.

Le document US 2033/141281 A1 décrit un dispositif d'aiguillage électrique selon le préambule de la revendication 1.

L'invention représente un perfectionnement de ce genre de dispositifs, à savoir un dispositif d'aiguillage à éclisse dont la structure est plus simple et surtout l'encombrement moins important. Sous une forme générale, elle concerne un dispositif d'aiguillage électrique comprenant une partie commune d'un réseau électrique, une paire de parties de division du réseau, lesdites parties de division pouvant être des jeux de barres, et un aiguillage placé à une confluence de la partie commune et des parties de division ; l'aiguillage comprenant : un premier contact fixe relié à la partie commune et deux contacts fixes reliés respectivement aux parties de division et comprenant chacun une portion de connexion munie d'une concavité, lesdits deux contacts fixes étant opposés dans l'aiguillage et les concavités étant tournées l'une vers l'autre ; un contact mobile, relié électriquement au premier contact fixe, disposé entre lesdites parties de connexion ; et un dispositif de commande du contact mobile sur une ligne reliant les portions de connexion ; le contact mobile est unique et caractérisé en ce qu'il a une longueur supérieure à une distance entre les portions de connexion mais inférieure à ladite distance plus une profondeur d'une des concavités.

Par rapport à la conception antérieure, l'invention autorise seulement trois états de fonctionnement, à savoir la connexion simultanée des deux parties de division du réseau électrique à la partie commune ou la connexion d'une seule d'entre elles, alors que les dispositifs antérieurs permettaient de déconnecter à la fois les deux parties de division du réseau ; mais il est apparu que cet état de déconnexion complète présentait peu d'intérêt, puisqu'un réseau électrique est normalement en état de service, et que la déconnexion en utilisant les éclisses est faite normalement pendant une opération d'entretien de la partie concernée du réseau, qui n'est pas simultanée à l'entretien de l'autre partie. Cette constatation a autorisé à simplifier le dispositif antérieur en conservant seulement un contact mobile dans l'éclisse, en diminuant la distance totale de mouvement et en diminuant aussi la largeur du support à travers lequel le contact mobile se déplace, puisqu'il comporte une seule région de support coulissant, au lieu de deux, pour les deux contacts mobiles du dispositif antérieur, qui doivent aussi être écartées l'une de l'autre.

Le support du contact mobile peut à présent avoir une dimension plus petite sur la ligne reliant les portions de connexion que sur une ligne perpendiculaire dirigée vers le premier contact fixe, et le dispositif de commande peut alors comprendre d'après un mode de réalisation possible : un axe pivotant traversant une enveloppe de l'aiguillage et aboutissant dans une région du support excentrée telle que le contact mobile s'étend entre le premier contact fixe et ladite région ; un levier mobile dans le support et relié rigidement à l'axe ; et une biellette articulée au levier et au contact mobile.

Il peut aussi y avoir d'autres modes de connexion, comme par exemple un système à crémaillère.

D'autres aspects importants de l'invention sont relatifs à un dispositif de commande du déplacement de l'aiguillage d'un état à un autre, dans le cas d'un réseau polyphasé ou afin de garantir certaines sécurités.

L'invention sera maintenant décrite en détail mais de façon purement illustrative, en liaison aux figures suivantes :
- la figure 1 illustre un aiguillage connu,
- les figures 2a, 2b et 2c illustrent un aiguillage de l'invention, dans trois positions principales,
- la figure 3 illustre le dispositif d'aiguillage entier, comprenant les portions du réseau adjacentes à l'aiguillage lui-même,
- la figure 4a illustre le dispositif d'aiguillage complet dans un réseau triphasé avec la représentation des 3 phases,
- la figure 4b illustre le dispositif complet de commande de l'aiguillage dans un réseau triphasé installé à demeure,
- la figure 4c illustre un dispositif simplifié de commande de l'aiguillage dans un réseau triphasé,
- la figure 4d illustre ce dispositif simplifié avec l'outil nécessaire à la manoeuvre,
- la figure 5a illustre une partie principale du dispositif simplifié,
- la figure 5b illustre une partie principale du dispositif complet,
- la figure 6 illustre un sectionneur dans deux états différents,
- la figure 7 illustre une autre réalisation de sectionneur,
- la figure 8 illustre un mécanisme de commande et de signalisation,
- les figures 9 et 10 illustrent deux électro-aimants de blocage,
- et les figures 11 et 12 illustrent deux autres états du mécanisme de commande et de signalisation.

On revient brièvement sur le dispositif décrit dans le document US-A-3 553 397. L'aiguillage à éclisse comprend, dans une enveloppe (1) en forme de T, des raccordements à des contacts fixes (2 et 3) connectés à des extrémités de conducteurs appartenant à des parties de division du réseau et un contact fixe (4) de raccordement à un conducteur d'alimentation commun. Des cônes d'isolation électrique communément référencés par (5) sont traversés par les contacts fixes (2, 3 et 4) et offrent aussi une isolation aux gaz des compartiments adjacents du réseau. Deux contacts mobiles (7 et 8) linéaires sont alignés sur une direction reliant les contacts fixes (2 et 3), et ils sont mus par des axes (9) (dont un seul est visible sur la figure) porteurs d'un levier (10) auquel l'élément mobile (7 ou 8) est relié par une biellette (11). L'enveloppe (1) comprend encore un support (12) dans lequel les contacts mobiles (7 et 8) coulissent, et qui est connecté électriquement au contact fixe (4). Dans la position représentée, les contacts mobiles (7 et 8) sont rétractés et les deux parties de division du réseau sont déconnectées. La connexion électrique au conducteur commun s'établit en faisant tourner les axes (9) (ou un seul d'entre eux), ce qui fait sortir des contacts mobiles (7 et 8) pour les faire entrer dans les contacts fixes (2 et 3) grâce au support (12).

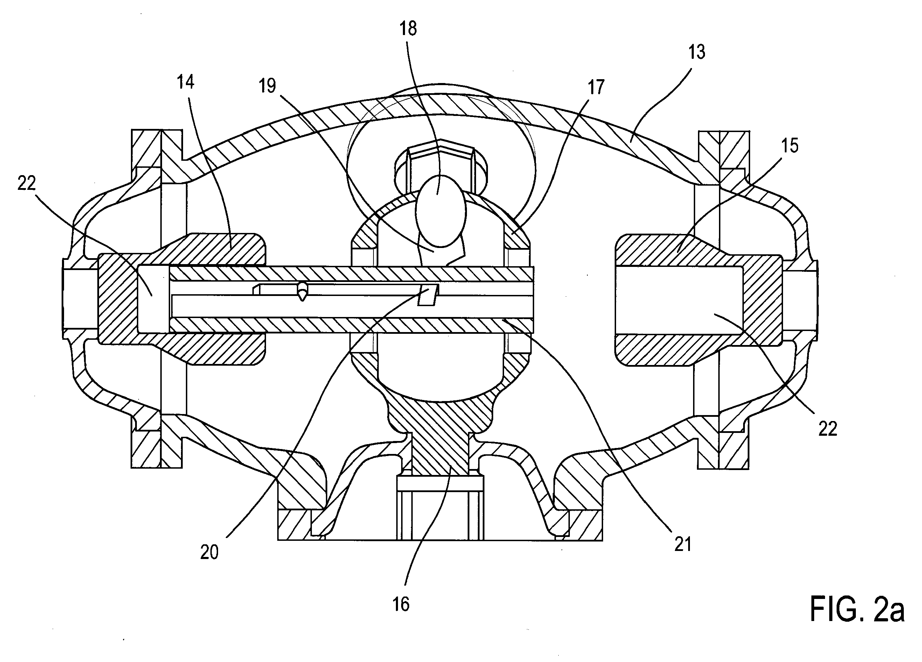

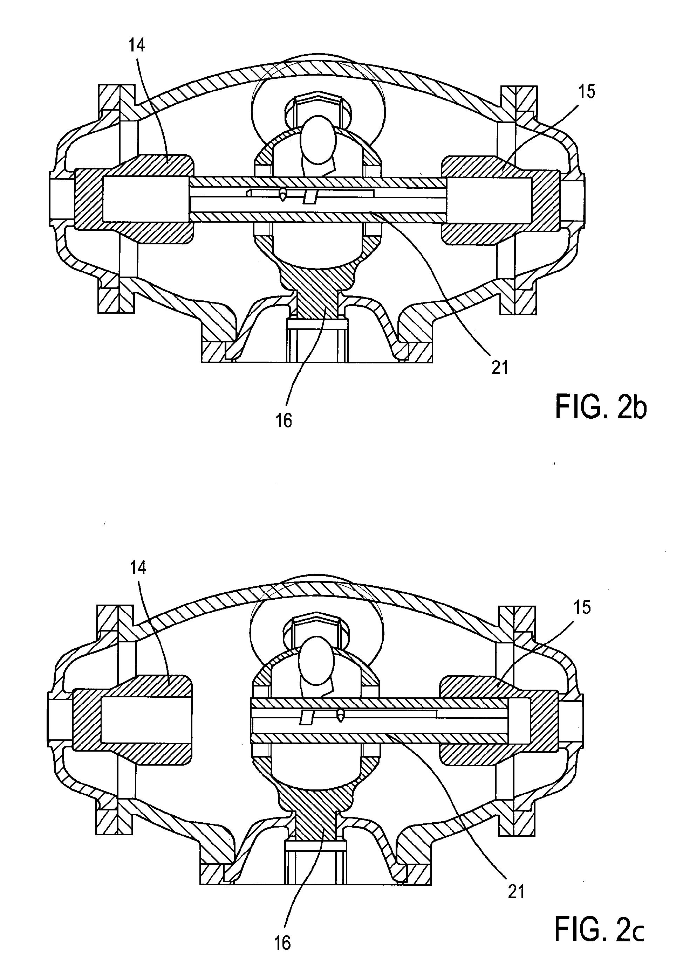

On se reporte maintenant aux figures 2a, 2b et 2c qui représentent une réalisation de l'invention. On retrouve sur l'aiguillage : une enveloppe (13) ; des contacts fixes (14, 15 et 16) de connexion à des conducteurs, appartenant respectivement à des portions de division du réseau et à une portion commune d'alimentation ; les contacts fixes (14, 15) reliés aux parties de division du réseau sont opposés, ont des portions de connexion électrique alignées et munies de concavités (22) dirigées l'une vers l'autre ; un support (17) central, conducteur de l'électricité et relié de façon permanente au contact fixe (16) connecté à la portion commune d'alimentation ; un mécanisme de commande comprenant un axe (18) traversant l'enveloppe (13) et aboutissant dans le support (17), l'axe (18) comprenant un levier (19) et une biellette (20) de mouvement d'un contact mobile (21) traversant le support (17) ; le contact mobile (21) est ici unique et apte à établir la connexion avec l'un ou l'autre des contacts fixes (14 et 15 : figures 2a et 2c), ou avec les deux à la fois (figure 2b) quand il est au milieu de sa course, en entrant dans les concavités (22), la longueur du contact mobile (21) étant choisie supérieure à la distance entre les contacts fixes (14 et 15) connectés aux portions de division du réseau, mais inférieure à la longueur totale entre cette distance et la profondeur de la concavité (22) dont ces deux contacts fixes (14 et 15) sont pourvus et dans laquelle l'élément mobile (21) peut s'enfoncer, ce qui garantit une distance de coupure électrique suffisante entre le contact mobile (21) et l'un ou l'autre des contacts fixes ((15) dans la représentation de la figure 2a) quand le contact mobile (21) est commandé vers une extrémité de sa course.

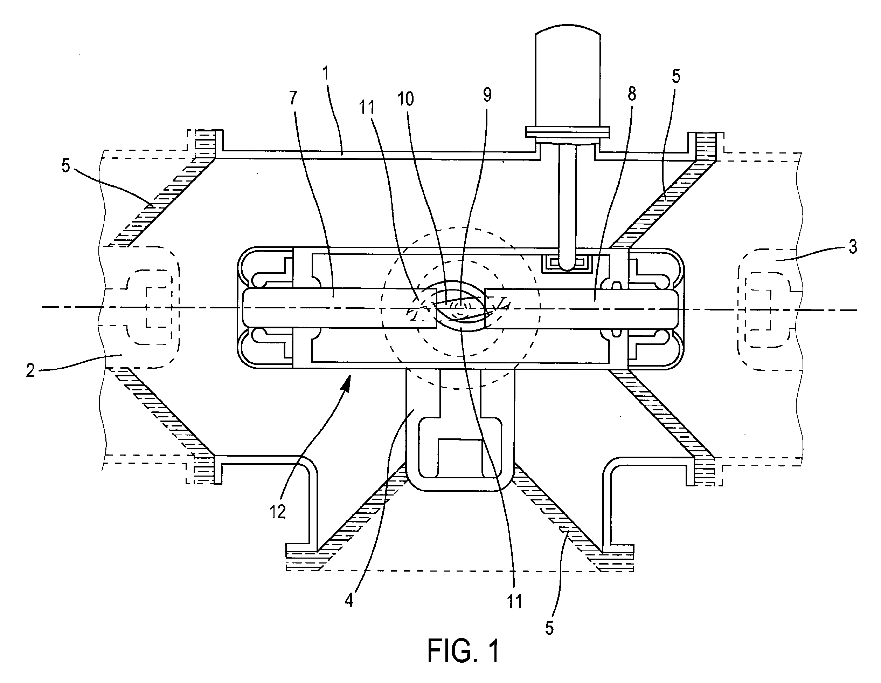

Par rapport à la figure 1, on remarque que le contact mobile (21) unique peut être soutenu à une région unique, centrale dans l'aiguillage, ce qui permet de diminuer beaucoup la taille du support (17) par rapport au support (12) de la conception antérieure. Le support (17) présent est en forme à peu près sphérique au lieu d'être très allongé dans la direction reliant les contacts fixes (2 et 3) comme dans la conception antérieure, et il peut même être de dimensions plus réduites dans la direction d'alignement des contacts fixes (14 et 15) connectés aux portions de division du réseau que dans une direction perpendiculaire. Une forme essentiellement sphérique garantit mieux sa tenue diélectrique. Il est avantageux pour la réduction de l'encombrement général que l'axe (18) pénètre dans le support (17) par une portion excentrée, à l'écart de la direction d'alignement des contacts fixes (14 et 15).

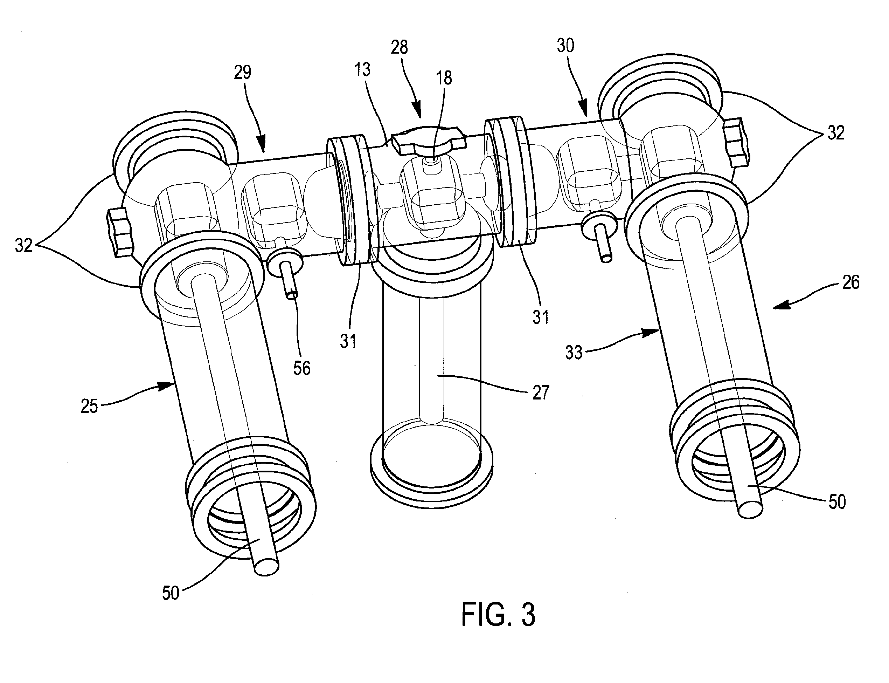

D'autres aspects de l'invention seront maintenant décrits en liaison aux figures qui suivent. La figure 3 représente une portion de réseau électrique où l'invention peut trouver emploi, avec deux jeux de barres (25 et 26) parallèles, un conducteur d'alimentation commun (27) situé entre les jeux de barres, et un aiguillage (28) conforme à la figure 2, disposé à l'intersection du conducteur commun (27) et des jeux de barres (25 et 26), des sectionneurs (29 et 30) étant toutefois disposés entre l'aiguillage (28) et les jeux de barres (25 et 26). Les jeux de barres (25 et 26), le conducteur d'alimentation commun (27) et en général tous les éléments du réseau électrique sont enfermés dans des enveloppes (33) ayant des propriétés d'isolation électrique et gazeuse pour protéger l'environnement de l'électricité et maintenir une atmosphère isolante autour du conducteur électrique. Des cônes isolants (31) sont disposés entre l'aiguillage (28) et les sectionneurs (29 et 30), et d'autres cônes (32) sont disposés çà et là dans les jeux de barres (25 et 26) ; les cônes (31 et 32) divisent le volume contenu dans l'enveloppe (33) en compartiments que l'on peut ouvrir pendant des opérations de maintenance sans avoir à vider le contenu gazeux des autres compartiments ni risquer des accidents électriques.

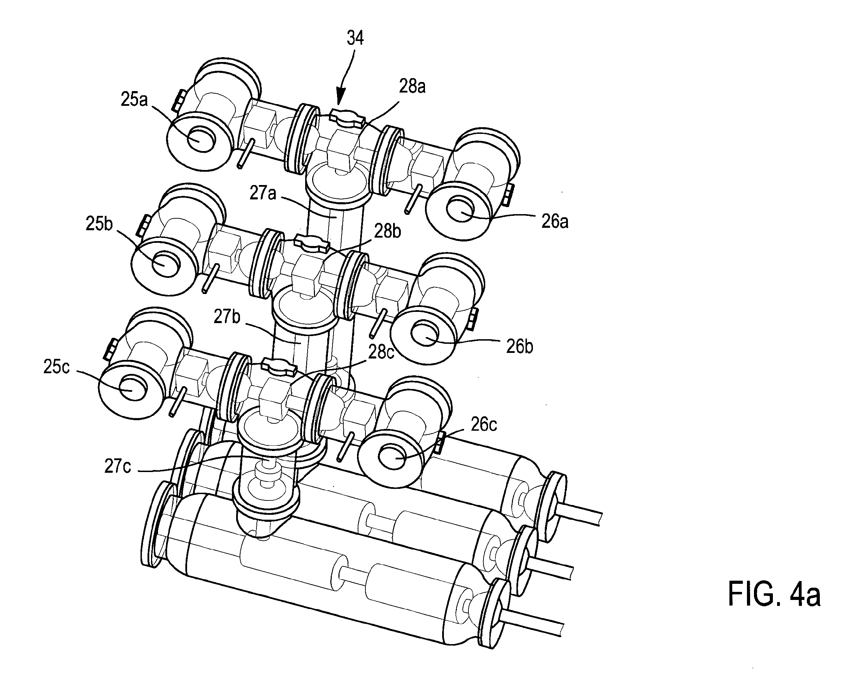

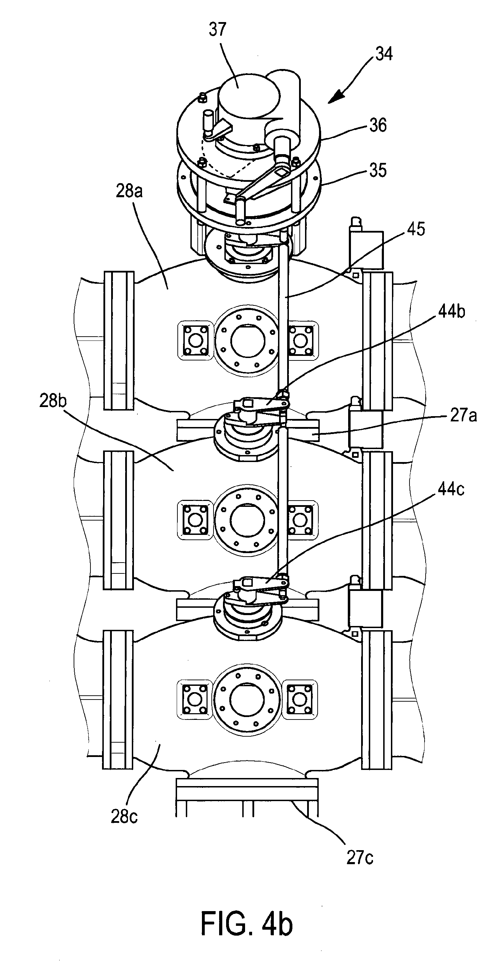

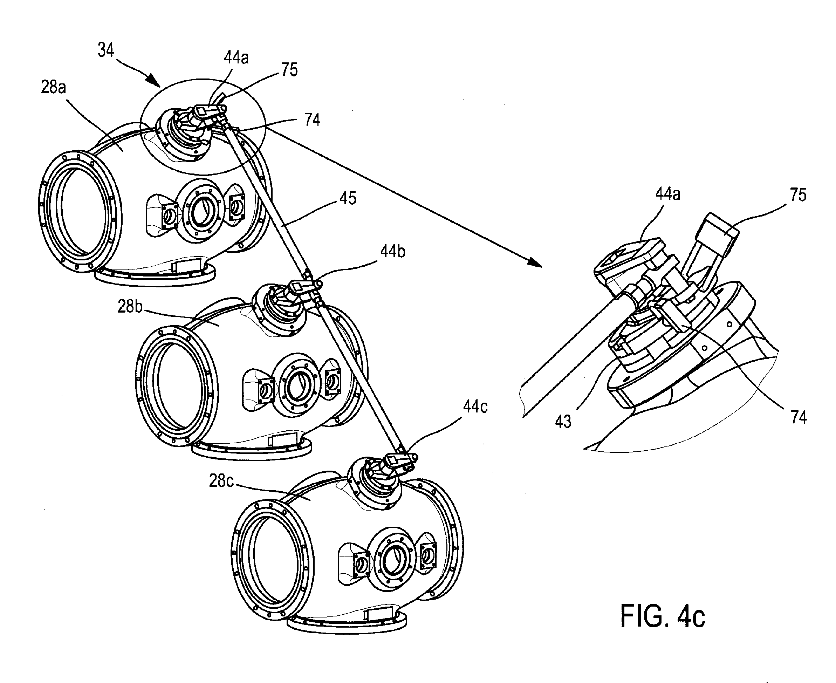

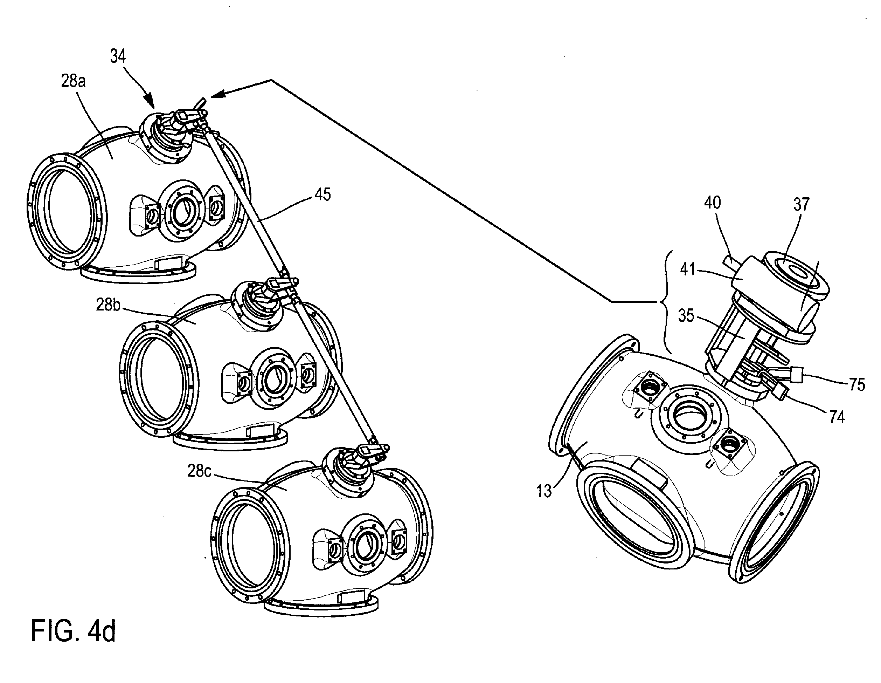

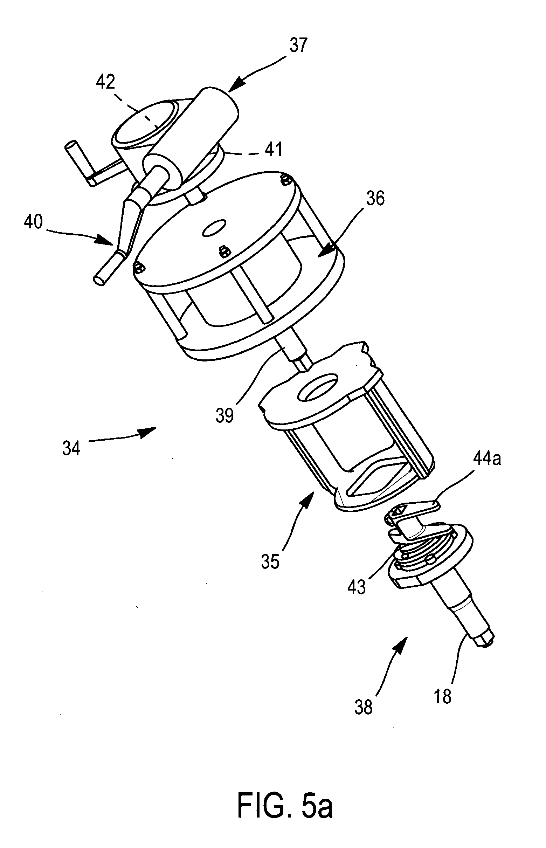

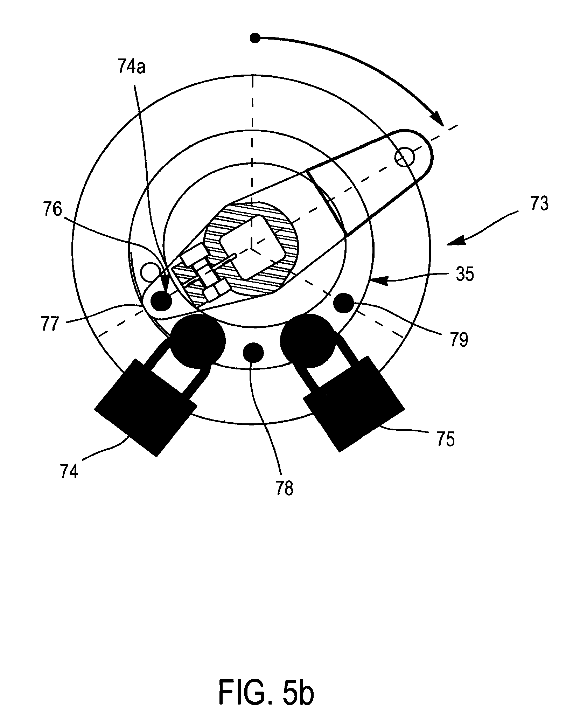

Le dispositif précédent doit être reproduit pour chacune des phases d'un réseau polyphasé. Une portion d'un réseau triphasé construit en conséquence est représentée à la figure 4a. On trouve trois jeux de barres (25a, 25b, 25c et 26a, 26b et 26c), trois aiguillages (28a, 28b et 28c), et des conducteurs d'alimentation communs triphasés (27a, 27b et 27c), tous disposés en parallèle. Les aiguillages (28a, 28b et 28c) sont commandés individuellement ou bien simultanément, avec un mécanisme par phase ou bien avec un mécanisme commun aux trois phases avec tringlerie de liaison. On va décrire en détail un dispositif de commande (34) unique à l'aide des figures 4a, b, c, d et 5a, b. Ce dispositif peut être sécurisé par un système simple de cadenas (comme représenté sur les figure 4c, 4d et 5b) ou peut être sécurisé par un système complet de signalisation et verrouillage (36 à la figure 5a) et installé à demeure sur l'aiguillage (comme représenté sur les figures 4a et 4b). La description commence par les figures 4a, 4b et 5a relatives à la réalisation la plus complexe ; la figure 4a illustre le réseau triphasé simple, la figure 4b l'installation du dispositif de commande (34) et la figure 5a ledit dispositif isolé. Le système fixe comprend un support (35) monté sur l'enveloppe (13) d'un des aiguillages (28a), un mécanisme de signalisation et verrouillage (36) monté sur le support (35), un actionneur (37) également monté sur le support (35) et une transmission (38) communiquant les mouvements originaires de l'actionneur à tous les aiguillages (28). Le mécanisme de signalisation et verrouillage (36) qui sera décrit plus loin, agit sur un axe (39) appartenant à la transmission (38) et disposé au centre du support (35). L'actionneur (37) comprend une manivelle (40) entraînant en rotation l'axe (39) pivotant par l'intermédiaire d'un limiteur de couple (41) et d'un engrenage à vis sans fin (42). Le limiteur de couple (41) sert à rendre une commande de déplacement inopérante quand elle est indésirable, d'après des règles de sécurité détaillées plus loin quand l'axe (39) est bloqué, en cessant de transmettre alors l'effort d'actionnement. Un palier (43) assujetti à l'enveloppe (13) de l'aiguillage (28a) soutient l'axe (39). L'axe (18) de l'aiguillage (28a), coaxial à l'axe (39), est entraîné par lui. Une bielle (44a) est montée sur l'axe (39) et entraînée en rotation par lui, en déplaçant une tringle (45) qui déplace elle-même d'autres bielles (44b et 44c) semblables à la précédente : les bielles (44b et 44c) sont fixées aux axes (18) des aiguillages (28b, 28c) et les entraînent en mouvement par des rotations égales à celles de l'axe (18) de l'aiguillage (28a). Cet unisson parfait des mouvements des axes (18) et des contacts mobiles (21) maintient les trois aiguillages (28a, 28b, 28c) dans un même état.

On décrit maintenant une réalisation simplifiée du dispositif de commande, noté (73), au moyen des figures 4c et 4d, qui représentent deux états du réseau, et de la figure 5b, qui représente le dispositif de commande (73) isolé. Le mécanisme de signalisation et de verrouillage (36) est omis, et l'outil (37) commande directement la rotation de l'axe (39). La bielle (44a) est cependant arrêtée par deux cadenas (74 et 75) engagés dans des perçages du support (35). Elle peut être retenue entre les cadenas (74 et 75) ou d'un côté extérieur d'un des cadenas (74 et 75). Trois positions principales peuvent donc être définies sur le dispositif de commande (73). Il est possible de les arrêter avec précision en faisant passer une tige (76) à travers un perçage de la bielle (44a) quand il s'aligne avec l'un ou l'autre de trois perçages (77, 78, 79) établis sur le support (35). Les cadenas (74 et 75) sont ouverts et retirés pour permettre la commutation du dispositif d'un état à un autre. L'outil (37) est amovible dans les deux réalisations afin d'être retiré en temps normal et de ne pas permettre de manoeuvre accidentelle.

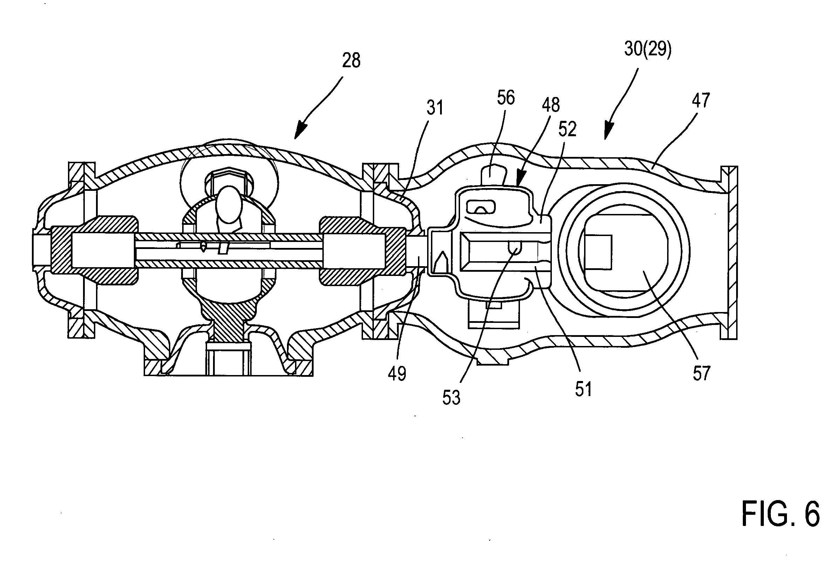

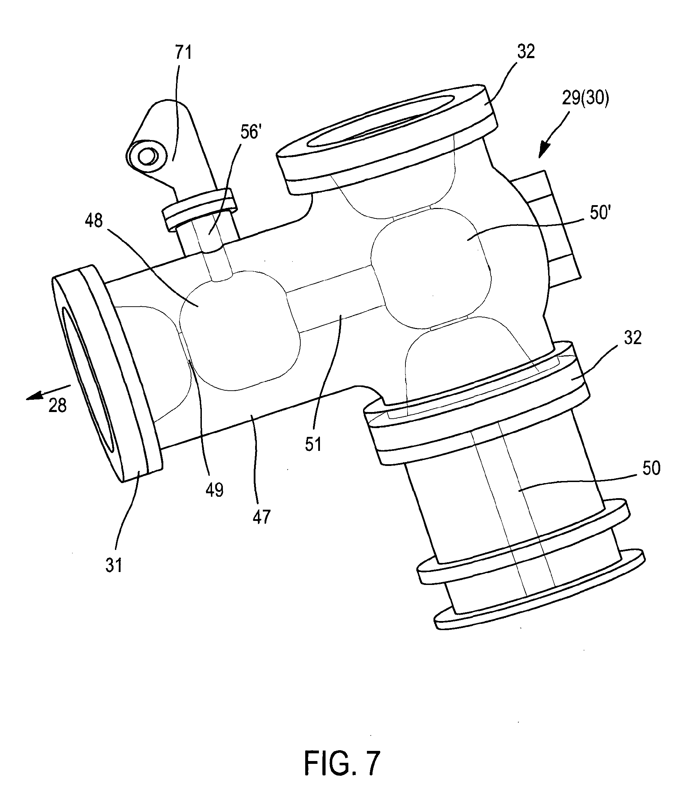

On passe maintenant à la description des sectionneurs (29 et 30) au moyen des figures 6 et 7. La figure 6 donne un mode de réalisation du sectionneur à trois positions et qui sera utilisé pour la suite de la description du dispositif de signalisation et vérouillage. Les sectionneurs (29 et 30) étant semblables et symétriques, la description portera seulement sur le sectionneur (30). Il comprend une enveloppe (47) s'ouvrant d'un côté sur l'aiguillage (28) à travers le cône (31). Un support (48) conducteur en forme approximativement sphérique comprend un embout (49) qui traverse le cône (31) et se raccorde au contact fixe (14). Un autre support (57) conducteur situé du côté opposé de l'enveloppe (47), est relié électriquement au conducteur (50 à la figure 3) du jeu de barres (25). Le sectionneur (29) comprend encore un contact mobile (51) coulissant dans un manchon (52) du support (48) sous l'action d'une bielle (53) qui lui est articulée. Le contact mobile (51) peut prendre trois positions principales : dans l'une d'entre elles, représentée à la figure 6 et qui est une position médiane, il est entièrement contenu dans le manchon (52) et assure une coupure entre le jeu de barres (25) et l'aiguillage (28) ; dans une autre position, non représentée, où il est le plus proche à l'aiguillage (28), il sort partiellement du manchon (52) et touche un contact de mise à la terre (56), à laquelle il relie le contact fixe (14) de l'aiguillage (28). Et dans une troisième position, non représentée et qui est une position de service normal, il pénètre dans une concavité du support (57) et établit donc une connexion électrique entre le conducteur (50) du jeu de barres (25) et le contact fixe (14) de l'aiguillage (28).

Un autre mode de réalisation est donné en figure 7 où le contact de mise à la terre (56') est un autre contact mobile manoeuvré indépendamment du contact mobile (51) déjà décrit et dont le fonctionnement n'est pas modifié : la mise à la terre s'effectue par un mouvement du contact de mise à la terre (56') par une clef (71) lui imposant un mouvement qui l'approche du contact mobile (31). Les fonctions de sectionneur et de mise à la terre sont donc séparées.

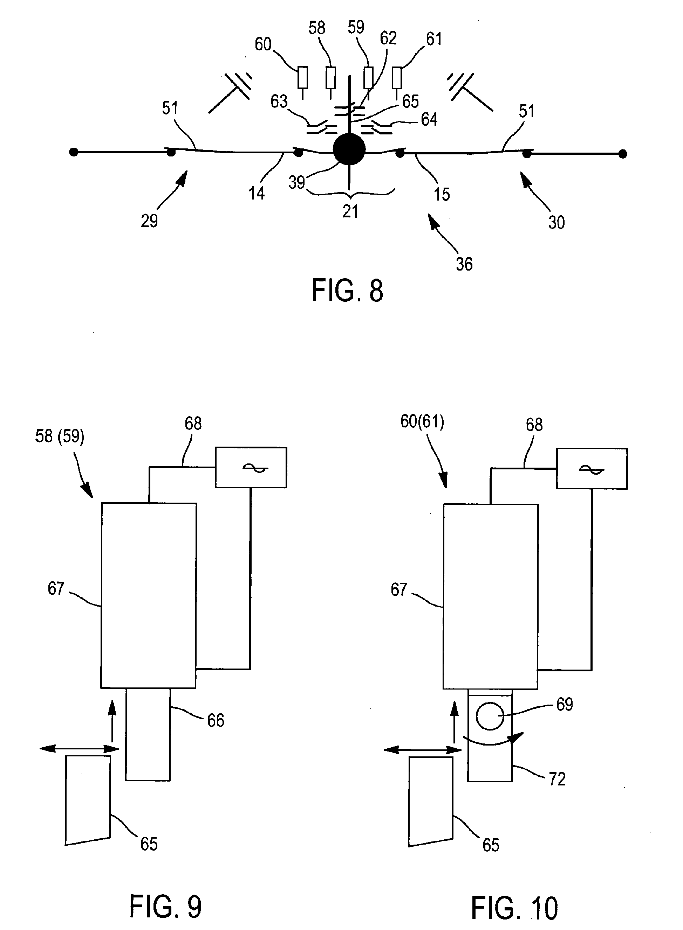

Le mode de commande de l'aiguillage (28) en liaison aux sectionneurs (29 et 30) sera maintenant décrit en liaison aux dernières figures. On détaillera aussi la constitution du mécanisme de signalisation et verrouillage (36). Il comprend (figure 8) quatre électro-aimants (58, 59, 60 et 61) alignés sur un secteur de cercle, deux d'entre eux étant centraux et les autres latéraux, des contacteurs de signalisation (62, 63 et 64), et l'axe (39) comprend au moins un taquet (65) passant à portée des électro-aimants (58, 59, 60 et 61) et des contacteurs de signalisation (62, 63 et 64).

Les électro-aimants comprennent tous (figures 9 et 10) une partie mobile (66 ou 72) déplacée par un bobinage (67) pouvant être excité par un circuit électrique (68) d'après les états des sectionneurs (29 et 30), selon les modalités décrites plus loin. Quand les bobinages (67) sont au repos, les parties mobiles (66 ou 72) sont déployées et aptes à bloquer le taquet (65). Quand les bobinages (67) sont excités, les parties mobiles (66 ou 72) sont rétractées et dégagées du taquet (65), qui peut alors passer devant elles sans encombre. Les électro-aimants (60 et 61) extrêmes ont toutefois la particularité que leur partie mobile (72) présente une articulation (69) qui permet au taquet (65) de la traverser en tournant l'articulation, mais dans un sens seulement. La partie mobile (72) est donc un obstacle ou taquet (65) dans un sens de rotation seulement, même quand elle est déployée.

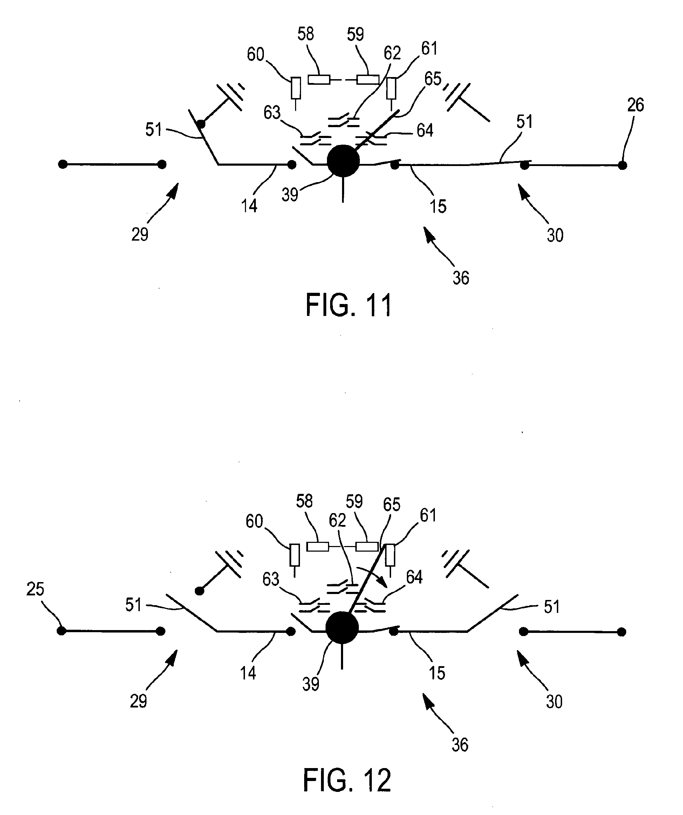

Trois positions principales de l'aiguillage (28) sont possibles. Dans la première d'entre elles, représentée à la figure 8, correspondant à un service normal où le contact mobile (21) est connecté aux contacts fixes (14 et 15), le taquet (65) s'étend entre les éléments mobiles (66) des électro-aimants (58 et 59) centraux, qui le maintiennent en place en exerçant leur butée, et le taquet (65) est à portée du contacteur de signalisation (62) central, qui détecte sa présence à cet endroit. Dans une autre position principale, représentée à la figure 11, le taquet (65) est complètement basculé d'un côté, il est retenu par le quatrième électro-aimant (61), s'étend devant le troisième contacteur de signalisation (64), et le contact mobile (21) touche seulement le contact fixe (15) : seul le jeu de barres (26) est en service, l'autre (25) étant déconnecté. Et dans une troisième position symétrique de la précédente mais non représentée, le taquet (65) serait retenu par le troisième électro-aimant (60), sa position serait détectée par le deuxième contacteur de signalisation (63), et seul l'autre jeu de barres (25) serait connecté.

Pour résumer, on cherche à assurer les sécurités suivantes avec cette réalisation de l'invention : l'ouverture de l'aiguillage (28) du côté d'un sectionneur (29 ou 30) est possible seulement si ce sectionneur a été ouvert, et la refermeture de l'aiguillage (28) devient possible seulement quand un électro-aimant latéral (60 ou 61) bloquant le taquet (65) a été excité par une action volontaire pour interrompre son verrouillage ; la mise à la terre d'un sectionneur (29 ou 30) est possible seulement si l'aiguillage (28) est ouvert du côté de ce sectionneur, et l'excitation évoquée ci-dessus d'un électro-aimant latéral (60 ou 61) bloquant le taquet (65) peut être rendue impossible tant que la mise à la terre subsiste.

Voici comment s'effectue une manoeuvre de déconnexion d'un des jeux de barres à partir de l'état de la figure 8, pour atteindre l'état de la figure 11. On se reporte à la figure 12. Le sectionneur (29) est d'abord ouvert, en le faisant passer de l'état fermé où le jeu de barres (25) est relié à l'aiguillage (28) à l'état de déconnexion où le jeu de barres (25) est isolé. Le deuxième électro-aimant (59) est alors excité, sa partie mobile (66) est rétractée, et le taquet (65) peut alors le franchir en étant déplacé vers la droite de la figure 12 dès que l'actionneur (40) est mis en marche pour faire tourner l'axe (39). Un mouvement erroné vers la gauche est impossible puisque le blocage du premier électro-aimant (58) est maintenu. Un verrouillage mécanique (au cadenas) ou électrique du sectionneur (29) est en pratique ajouté pour interdire sa refermeture par un mouvement inverse. Le taquet (65) traverse ensuite l'élément mobile (72) du quatrième électro-aimant (61) en le faisant tourner autour de son articulation (69). Un mouvement de retour est pour l'instant impossible, puisque le quatrième électro-aimant (61) bloquerait le taquet (65), la partie mobile (72) étant rigide dans ce sens. L'état de la figure 11 est alors obtenu, et il est possible de l'assurer par un verrouillage mécanique de l'élément mobile (72) de l'électro-aimant (61) pour maintenir l'aiguillage (26) à cette portion de déconnexion du sectionneur (29). Le taquet (65) est à portée du troisième contacteur de signalisation (64). Il devient alors possible de mettre le sectionneur (29) à la terre sans inconvénient. Le troisième contacteur de signalisation (64) peut être intégré au mécanisme de commande du sectionneur (29) pour interdire les mises à la terre tant que l'aiguillage (28) ne l'a pas complètement déconnecté de la partie commune du réseau. L'état de la figure 11 est alors atteint. L'ouverture du sectionneur (30) et de l'aiguillage (28) dans l'autre sens se ferait par un mouvement opposé avec les mêmes effets, le mécanisme de verrouillage et de signalisation (36) étant parfaitement symétrique.

## Revendications

1. Dispositif d'aiguillage électrique comprenant une partie commune (27) d'un réseau électrique, une paire de parties de division du réseau, lesdites parties de division (25, 26) pouvant être des jeux de barres, et un aiguillage (28) placé à une confluence de la partie commune et des parties de division ; l'aiguillage comprenant : un premier contact fixe (16) relié à la partie commune et deux contacts fixes (14, 15) reliés respectivement aux parties de division, et comprenant chacun une portion de connexion munie d'une concavité (22), lesdits deux contacts fixes (14, 15) étant opposés dans l'aiguillage et les concavités étant tournées l'une vers l'autre ; un contact mobile (21), relié électriquement au premier contact fixe (16), disposé entre lesdites portions de connexion ; et un dispositif de commande (18, 19, 20 ; 34) déplaçant le contact mobile sur une ligne reliant les portions de connexion ; le contact mobile est unique et **caractérisé en ce qu'**il a une longueur supérieure à une distance entre les portions de connexion mais inférieure à ladite distance plus une profondeur d'une des concavités.

2. Dispositif selon la revendication 1, **caractérisé en ce que** l'aiguillage comprend encore un support (17) à travers lequel le contact mobile (21) s'étend et où il coulisse, le support a une dimension plus petite sur la ligne reliant les portions de connexion que sur une ligne perpendiculaire dirigée vers le premier contact fixe (16), et le dispositif de commande comprend : un axe pivotant (18) traversant une enveloppe (13) de l'aiguillage et aboutissant dans une région du support telle que le contact mobile (21) s'étend entre le premier contact fixe (16) et ladite région ; un levier (19) mobile dans le support et relié rigidement à l'axe ; et une biellette (20) articulée au levier au contact mobile (21).

3. Dispositif selon l'une quelconque des revendications 1 ou 2, **caractérisé en ce que** les parties de division comprennent des sectionneurs (29, 30) équipés de moyens de mise à la terre adjacents à l'aiguillage.

4. Dispositif selon la revendication 3, **caractérisé en ce que** le dispositif de commande (34, 73) comprend un mécanisme de verrouillage dépendant des sectionneurs.

5. Dispositif selon la revendication 4, **caractérisé en ce que** le mécanisme de verrouillage comprend des cadenas (74, 75) engagés de façon amovible sur un support (35) du dispositif de commande (73) et servant à bloquer une bielle (44a) appartenant à une transmission reliant un moyen actionneur du dispositif de commande au contact mobile (21).

6. Dispositif selon la revendication 4, **caractérisé en ce que** le mécanisme de verrouillage comprend des électro-aimants (58, 59, 60, 61) munis de parties mobiles (66) de blocage d'un élément (39, 65) appartenant à une transmission reliant un moyen actionneur du dispositif de commande au contact mobile (21), et des bobinages (67) excités d'après des états imposés aux sectionneurs.

7. Dispositif selon la revendication 6, **caractérisé en ce que** les parties mobiles de blocage sont déployées en position de blocage de l'élément (39, 65) de la transmission quand les bobinages (67) ne sont pas excités.

8. Dispositif selon l'une quelconque des revendications 6 ou 7, **caractérisé en ce que** les électro-aimants comprennent deux électro-aimants centraux (58, 59) aptes à retenir l'élément de la transmission à une position où les portions de division du réseau sont toutes deux reliées à la partie commune par le contact mobile (21), et deux électro-aimants latéraux (60, 61) aptes chacun à retenir l'élément (39, 65) de la transmission à une position où une seule des parties de division du réseau est reliée à la partie commune par le contact mobile (21).

9. Dispositif selon la revendication 8, **caractérisé en ce que** les électro-aimants latéraux ont des parties mobiles aptes à bloquer l'élément (39, 65) de la transmission seulement quand celui-ci quitte ladite position où une seule des parties de division du réseau est reliée à la partie commune par l'élément mobile de connexion.

## Patentansprüche

1. Elektrische Schaltvorrichtung, enthaltend einen gemeinsamen Teilabschnitt (27) eines Stromnetzes, ein Paar von Unterteilungsabschnitten des Netzes, wobei die Unterteilungsabschnitte (25, 26) Sammelschienen sein können, und eine Schaltung (28), die an einem Berührungspunkt des gemeinsamen Teilabschnitts und der Unterteilungsabschnitte angeordnet ist; wobei die Schaltung aufweist: ein erstes festes Kontaktstück (16), das mit dem gemeinsamen Teilabschnitt verbunden ist, und zwei feste Kontaktstücke (14, 15), die mit den jeweiligen Unterteilungsabschnitten verbunden sind und jeweils einen Verbindungsbereich haben, der mit einer Vertiefung (22) versehen ist, wobei die beiden festen Kontaktstücke (14, 15) in der Schaltung entgegengesetzt liegen und die Vertiefungen einander zugewandt sind; sowie ein bewegliches Kontaktstück (21), das elektrisch mit dem ersten festen Kontaktstück (16) verbunden und zwischen den Verbindungsbereichen angeordnet ist; und eine Steuervorrichtung (18, 19, 20; 34), die das bewegliche Kontaktstück über eine Linie verlagert, welche die Verbindungsbereiche verbindet; wobei das bewegliche Kontaktstück einzig ist **dadurch gekennzeichnet ist, dass** es eine Länge aufweist, die größer als eine Entfernung zwischen den Verbindungsbereichen ist, jedoch kleiner als die Entfernung zuzüglich einer Tiefe einer der Vertiefungen.

2. Vorrichtung nach Anspruch 1, **dadurch gekennzeichnet, dass** die Schaltung ferner einen Träger (17) aufweist, durch den hindurch sich das bewegliche Kontaktstück (21) erstreckt und sich gleitend verlagert, wobei der Träger über die Linie, welche die Verbindungsbereiche verbindet, eine kleinere Abmessung hat als über eine dazu senkrecht verlaufende Linie, die zum ersten festen Kontaktstück (16) führt, und dass die Steuervorrichtung enthält: eine Schwenkachse (18), die sich durch einen Mantel (13) der Schaltung erstreckt und in einen Bereich des Trägers endet, derart, dass das bewegliche Kontaktstück (21) sich zwischen dem ersten festen Kontaktstück (16) und dem genannten Bereich erstreckt; einen Hebel (19), der in dem Träger beweglich ist und starr mit der Achse verbunden ist; und ein Gestänge (20), das am Hebel an das bewegliche Kontaktstück (21) angelenkt ist.

3. Vorrichtung nach einem der Ansprüche 1 oder 2, **dadurch gekennzeichnet, dass** die Unterteilungsabschnitte Trennschalter (29, 30) aufweisen, die mit Erdungseinrichtungen ausgestattet sind, die an die Schaltung angrenzen.

4. Vorrichtung nach Anspruch 3, **dadurch gekennzeichnet, dass** die Steuervorrichtung (34, 73) einen mit den Trennschaltern zusammenhängenden Verriegelungsmechanismus aufweist.

5. Vorrichtung nach Anspruch 4, **dadurch gekennzeichnet, dass** der Verriegelungsmechanismus Vorhängeschlösser (74, 75) aufweist, die lösbar in einen Träger (35) der Steuervorrichtung (73) eingreifen und dazu dienen, einen Schwenkarm (44a) zu sichern, der zu einem Getriebe gehört, das eine Betätigungseinrichtung der Steuervorrichtung mit dem beweglichen Kontaktstück (21) verbindet.

6. Vorrichtung nach Anspruch 4, **dadurch gekennzeichnet, dass** der Verriegelungsmechanismus Elektromagnete (58, 59, 60, 61) aufweist, die mit beweglichen Sicherungsabschnitten (66) zum Sichern eines Elements (39, 65) ausgestattet sind, die zu einem Getriebe gehören, das eine Betätigungseinrichtung der Steuervorrichtung mit dem beweglichen Kontaktstück (21) verbindet, sowie Wicklungen (67), die je nach den Trennschaltern vorgegebenen Zuständen erregt werden.

7. Vorrichtung nach Anspruch 6, **dadurch gekennzeichnet, dass** die beweglichen Sicherungsabschnitte in Sicherungsstellung aus dem Element (39, 65) des Getriebes ausgerückt sind, wenn die Wicklungen (67) nicht erregt werden.

8. Vorrichtung nach einem der Ansprüche 6 oder 7, **dadurch gekennzeichnet, dass** die Elektromagnete zwei mittige Elektromagnete (58, 59) aufweisen, die dazu geeignet sind, das Element des Getriebes in einer Stellung zu halten, wo alle beide Unterteilungsabschnitte des Netzes über das bewegliche Kontaktstück (21) mit dem gemeinsamen Abschnitt verbunden sind, sowie zwei seitliche Elektromagnete (60, 61), die dazu geeignet sind, das Element (39, 65) des Getriebes in einer Stellung zu halten, wo nur einer der Unterteilungsabschnitte des Netzes über das bewegliche Kontaktstück (21) mit dem gemeinsamen Abschnitt verbunden ist.

9. Vorrichtung nach Anspruch 8, **dadurch gekennzeichnet, dass** die seitlichen Elektromagnete bewegliche Abschnitte haben, die dazu geeignet sind, das Element (39, 65) des Getriebes nur dann zu sichern, wenn dieses die Stellung verlässt, wo nur einer der Unterteilungsabschnitte des Netzes über das bewegliche Verbindungselement mit dem gemeinsamen Abschnitt verbunden ist.

## Claims

1. An electrical switch device comprising a shared portion (27) of an electrical network, a pair of network division portions, said division portions (25, 26) possibly being sets of busbars, and a switch (28) placed at a point of confluence between the shared portion and the division portions; the switch comprising: a first stationary contact (16) connected to the shared portion, and two stationary contacts (14, 15) connected respectively to the division portions, and each comprising a connection portion provided with a depression (22), said two stationary contacts (14, 15) being opposite each other in the switch and the depressions facing towards each other; a movable contact (21), electrically connected to the first stationary contact (16), disposed between said connection portions; and a control device (18, 19, 20; 34) moving the movable contact on a line connecting together the connection portions; there is only one movable contact and the movable contact is **characterized in that** it has a length that is greater than a distance between the connection portions but that is less than said distance plus a depth of one of the depressions.

2. A device according to claim 1, **characterized in that** the switch further comprises a support (17) through which the movable contact (21) extends and where it slides, the support having a smaller dimension along a line connecting the connection portions than along a perpendicular line directed towards the first stationary contact (16), and the control device comprises: a pivot shaft (18) passing through a casing (13) of the switch and ending in a region of the support such that the movable contact (21) extends between the first stationary contact (16) and said region; a lever (19) that is movable in the support and that is rigidly connected to the shaft; and a link (20) that is hinged to the lever and to the movable contact (21).

3. A device according to claim 1 or claim 2, **characterized in that** the division portions comprise disconnectors (29, 30) fitted with grounding means that are adjacent to the switch.

4. A device according to claim 3, **characterized in that** the control device (34, 73) comprises a locking mechanism dependent on the disconnectors.

5. A device according to claim 4, **characterized in that** the locking mechanism comprises padlocks (74, 75) that are engaged in removable manner on a support (35) of the control device (73) and that are used to block a crank (44a) forming part of a transmission connecting actuator means of the control device to the movable contact (21).

6. A device according to claim 4, **characterized in that** the locking mechanism comprises electro-magnets (58, 59, 60, 61) provided with movable portions (66) for blocking an element (39, 65) forming part of a transmission connecting actuator means of the control device to the movable contact (21), and windings (67) excited in accordance with states imposed on the disconnectors.

7. A device according to claim 6, **characterized in that** the movable blocking portions are deployed in a position to block the element (39, 65) of the transmission when the windings (67) are not excited.

8. A device according to claim 6 or claim 7, **characterized in that** the electro-magnets comprise two central electro-magnets (58, 59) that are suitable for retaining the element of the transmission in a position in which the network division portions are both connected to the shared portion by the movable contact (21), and two lateral electro-magnets (60, 61), each suitable for retaining the element (39, 65) of the transmission in a position in which only one of the network division portions is connected to the shared portion by the movable contact (21).

9. A device according to claim 8, **characterized in that** the lateral electro-magnets have movable portions that are suitable for blocking the element (39, 65) of the transmission only when said transmission leaves said position in which only one of the network division portions is connected to the shared portion by the movable connection element.
